# EUROPÄISCHE PATENTSCHRIFT

(11) **EP 2 276 624 B1**
(45) Veröffentlichungstag und Bekanntmachung des Hinweises auf die Patenterteilung: **24.04.2013**
(21) Anmeldenummer: 09722355.6
(22) Anmeldetag: 04.02.2009
(51) Int. Cl.: B29C 73/16

(54) **PANNENHILFESYSTEM**
CAR BREAKDOWN AIDE SYSTEM
SYSTÈME AUXILIAIRE DE DÉPANNAGE

(30) Priorität: 19.03.2008 DE 102008015022
(43) Veröffentlichungstag der Anmeldung: 26.01.2011
(73) Patentinhaber: Continental Reifen Deutschland GmbH, 30165 Hannover (DE)
(72) Erfinder: DETERING, Rainer, 30926 Seelze (DE); ERNST, Gerhard, 30629 Hannover (DE); GERLACH, Markus, 31078 Grünenplan (DE)
(74) Vertreter: Finger, Karsten
(86) Internationale Anmeldenummer: PCT/EP2009/051211
(87) Internationale Veröffentlichungsnummer: WO 2009/115368

(56) Entgegenhaltungen:
- DE-U1-202006 001 994
- DE-U1-202007 009 152

## Beschreibung

Die Erfindung betrifft ein Pannenhilfesystem zum Abdichten und Aufpumpen von Kraftfahrzeugreifen nach dem Oberbegriff des Hauptanspruchs. Dabei umfasst das Pannenhilfesystem eine Druckgasquelle, einen Behälter für ein in den Kraftfahrzeugreifen einfüllbares selbsttätiges Dichtmittel, eine mit dem Behälter verbundene Ventileinheit für Dichtmittel und Druckgas, bei dem die Ventileinheit mit einer an die Druckgasquelle anschließbaren Einlassleitung und einer an den aufblasbaren Gegenstand anschließbaren Auslassleitung versehen ist und geeignete Verbindungsmittel zur Verbindung zwischen Druckgasquelle und Einlassleitung des Behälters sowie zwischen Auslassleitung des Behälters und Kraftfahrzeugreifen vorhanden sind. Der Behälter weist ferner eine an seinem oberen Ende befindlichen Behälteröffnung auf und ist aufrecht angeordnet. Die Ventileinheit ist als Deckel für die Behälteröffnung ausgebildet und die Einlassleitung weist ein Einlassventil auf, welches bei Beaufschlagung mit Druckgas aus der Druckquelle die Einlassleitung zum Behälterinnenraum öffnet. Die Auslassleitung ist dabei mit einem in den Behälter hineinragenden und bis unter den Dichtmittelspiegel reichenden Steigrohr verbunden und weist ein Auslassventil auf, welches bei Beaufschlagung mit Druckgas aus der Druckquelle die Auslassleitung vom Behälterinnenraum zum Kraftfahrzeugreifen hin öffnet.

Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Bei Fahrzeugen, die nicht mit schlauchlosen Reifen versehen sind, wie etwa bei Fahrrädern, ist es bei einer Reifenpanne nötigt, mit umfangreichem Werkzeug nach der Montage des Reifens den Mantel von der Felge zu entfernen, den Schlauch zu entnehmen und mit entsprechend mitgeführtem Reparaturmaterial zu flicken. Danach muss der Reifen bzw. der Schlauch oft mehrfach aufgepumpt werden, um eine einigermaßen sichere Weiterfahrt zu gewährleisten. Neben der schwierigen Reparaturtätigkeit besteht bei dem bisher bekannten Verfahren der Nachteil, dass die notwendigen Reparaturmaterialien, wie etwa eine entsprechende Pumpe sowie Hebe- und Schraubwerkzeuge, sowie bei nächtlichen Pannen nötige Beleuchtungskörper, in oder bei den entsprechenden Fahrzeugen nur unvollständig oder gar nicht vorhanden oder an den unterschiedlichsten Stellen verstaut sind und lange gesucht werden müssen.

Um diese Nachteile zu vermeiden, sind bereits Reparatursätze bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

Die Bedienung solcher Reparatursätze ist aber auch nicht ganz einfach, insbesondere dann, wenn je nach Betriebszustand zunächst Dichtmittelbehälter und diverse Schlauchverbindungen angeschlossen oder umgebaut werden müssen. Die meisten Reparatursätze sind nämlich auch gut dazu geeignet, ohne Dichtmitteleinsatz lediglich zum Aufblasen von Reifen, Schlauchbooten, Luftmatratzen, etc. eingesetzt zu werden. Aufgrund der heutzutage nur noch selten auftretenden Reifenpannen werden die Reparatursätze in der Regel häufiger für solche Freizeitzwecke gebraucht als für Notfälle.

Wenn dies dann aber doch geschieht, befindet sich der Nutzer in ungewohnter und ungeübter Situation.

Zur Erleichterung der Handhabung der Geräte/Reparatursätze in solchen unterschiedlichen Anwendungen sind im Stand der Technik bereits Lösungen bekannt, die im Wesentlichen ein vereinfachtes Umschalten von der einen auf die andere Betriebsart beinhalten. Auch existieren Lösungen mit Steckverbindungen zwischen einzelnen Teilen der Geräte/Reparatursätze.

So offenbart die DE 101 06 468 A1 eine Vorrichtung zum Ausbringen von Reifendichtmittel aus einem Behälter, wobei dem Behälter ein Entnahmeelement mit einem Ventil zugeordnet ist, welches zum Ausbringen von Reifendichtmittel dient. Das Ventil ist dabei als Ein- oder Mehrwegeventil ausgebildet und weist einen schaltbaren Bypass auf, beispielsweise zu betätigen durch einen Drehschalter, so dass in einer Schaltstellung eine Druckgasquelle direkt mit dem Reifen oder dem aufzublasenden Gegenstand verbunden werden kann. In einer anderen Schaltstellung ist eine Verbindung zwischen Druckgasquelle (Einlass), Dichtmittelbehälter und aufzublasenden Gegenstand (Auslass) möglich. Es kann also eine Umschaltung zwischen den Betriebszuständen "nur Aufpumpen" und "Pumpen mit Dichtmittel" vorgenommen werden, ohne Schlauchverbindungen zu wechseln oder Umbauten an dem Gerät vorzunehmen. Das hier offenbarte Ventil ist zwar einfach aufgebaut, jedoch wenig robust und kann ggf. leicht verkleben. Außerdem wird zum sicheren Verschluss des Dichtmittelbehälters bei Transport und im Betriebszustand "nur Aufpumpen" ein zusätzliche Versiegelung benötigt.

Die DE 20 2007 009 152 U1 offenbart eine Vorrichtung gemäß dem Oberbegriff des Auspruchs 1 zum Abdichten von Reifen, bei dem ein Behälter mit Abdichtmittel und ein Behälter mit Treibmittel miteinander in Kontakt stehen, wobei in einer Verschlusskappe integrierte eine Verbindungsleitung vorgesehen ist, um das Treibmittel dem Abdichtmittel zuzuführen und eine Anschlussleitung an den Reifen, um das Gemisch zuzuführen.

Die DE 20 2006 001 994 U1 offenbart bereits eine Vorrichtung zum Ausbringen von Reifendichtmittel aus einem Behälter. Bei dieser Lösung ist der Behälter mit einem Verschlusselement, also einem Deckel verbindbar, an dessen Einlassöffnung eine Druckquelle anschließbar ist und Überdruck erzeugt, durch den Verschlusselemente /Ventile in der Einlassöffnung und in der Auslassöffnung geöffnet werden können. Die hier offenbarten konstruktiven Lösungen sind jedoch relativ aufwendig ausgebildet.

Ausgehend von diesem Stand der Technik bestand für die Erfindung die Aufgabe, eine Vorrichtung zum Abdichten und Aufpumpen aufblasbarer Gegenstände bereitzustellen, die eine sichere Verbindung zwischen Dichtmittelbehälter bzw. Ventil- und Verteilereinheit bereitstellt, die eine vereinfachte Anwendung in der einen oder anderen Betriebsart erlaubt, keine zusätzlichen Dichtmaßnahmen des Behälterausgangs erfordert, die sicher zu handhaben ist und die insbesondere eine möglichst einfache Konstruktion bei gleichzeitig robuster Ausführung aufweist und dazu einfach und preisgünstig herzustellen ist.

Gelöst wird diese Aufgabe durch die Merkmale des Hauptanspruchs. Weitere vorteilhafte Ausbildungen sind in den Unteransprüchen offenbart.

Dabei ist die Einlassleitung als Ringraum-Leitung innerhalb eines in die Behälteröffnung reichenden Einlassstutzens ausgebildet. Das Einlassventil ist dazu als eine in die Ringraum-Leitung eingesetzte O-Ring-Dichtung ausgebildet, der bei Beaufschlagung mit Druckgas aus dem Einlassstutzen bleibend verschiebbar ist. Eine Ringraum-Leitung kann einfach dadurch gebildet werden, dass über eine bestimmte Leitungslänge ein zentrisch angeordneter, massiver oder auch hohler Rundstab in der Leitung angeordnet ist.

Durch eine solche Ausbildung ergeben sich eine überaus kompakte Bauweise und eine sehr einfache Herstellung aus Normbauteilen und mit nur wenigen einfachen Fertigungsschritten wie Bohren oder Fräsen oder Spritzgießen. Das Öffnen des Einlassventils und des Auslassventils erfolgt dabei automatisch und sicher.

In einer besonders vorteilhaften Ausbildung ist die Einlassleitung als Ringraum-Leitung innerhalb eines zentrisch in die Behälteröffnung reichenden Einlassstutzens ausgebildet und umgibt Teillängen der Auslassleitung ringförmig. Die Einlassleitung ist dabei als eine um die Auslassleitung verlaufende Leitung ausgebildet, wobei die Außenwand der innen liegenden Auslassleitung mit der Innenwand der Einlassleitung einen Ringraum bildet. In diesem Ringraum sitzt dann der O-Ring.

Damit werden die Baugröße der Ventileinheit und die Anzahl der bewegten Einzelteile /Funktionsteile minimal, wobei die Bauteile überaus robust ausgeführt werden können.

Die weiteren vorteilhaften Ausbildungen lassen sich am besten anhand der nachfolgend beschriebenen Ausführungsbeispiele erläutern. Es zeigen
- Fig. 1: einen Behälters eines erfindungsgemäßen Pannenhilfesystems mit der zugehörige Ventileinheit und den Einlass- und Auslassventilen im Schnitt
- Fig. 2: eine weitere Ausführung der Ventileinheit mit den Einlass- und Auslassventilen für ein erfindungsgemäßes Pannenhilfesystems im Schnitt
- Fig. 3: einen Behälters eines erfindungsgemäßen Pannenhilfesystems mit einer dritten Ausführung der zugehörigen Ventileinheit und den Einlass- und Auslassventilen im Schnitt
- Fig. 4: eine vierte Ausführung der Ventileinheit mit den Einlass- und Auslassventilen für ein erfindungsgemäßes Pannenhilfesystems im Schnitt

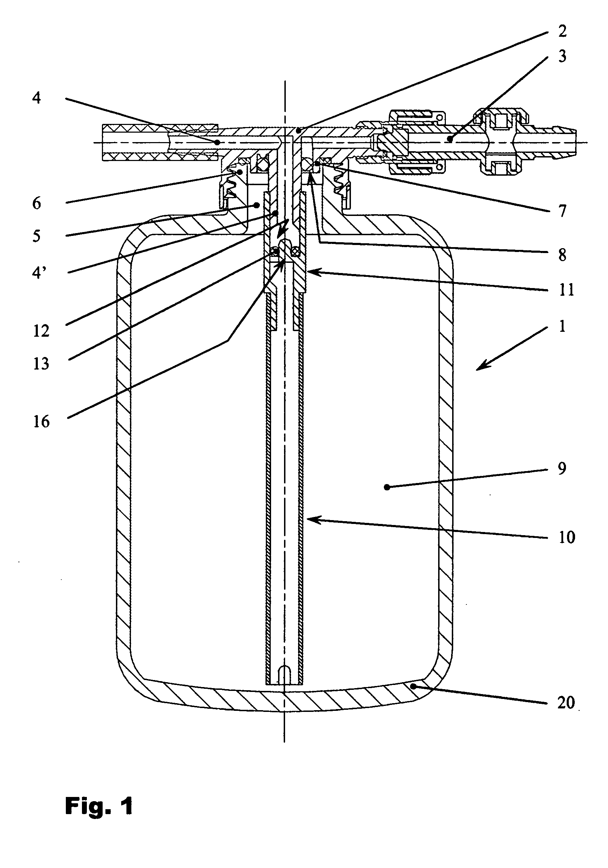

Die Fig. 1 zeigt einen Behälter 1 eines erfindungsgemäßen Pannenhilfesystems mit der zugehörigen Ventileinheit und den Einlass- und Auslassventilen im Schnitt, wobei das Pannenhilfesystem eine hier nicht näher dargestellte Druckgasquelle aufweist, die an die Ventileinheit 2 über eine Einlassleitung 3 angeschlossen ist. Die Ventileinheit 2 weist eine an den ebenfalls hier nicht näher dargestellten Kraftfahrzeugreifen anschließbare Auslaßleitung 4 auf.

Die Ventileinheit ist dabei als Deckel oder Verschluss für die Behälteröffnung 5 ausgebildet. Ebenfalls hier nicht näher dargestellt sind die geeigneten Verbindungsmittel zur Verbindung zwischen Druckgasquelle und Einlassleitung 3 des Behälters 1 sowie zwischen Auslassleitung 4 des Behälters 1 und Kraftfahrzeugreifen. Dies sind in aller Regel flexible und luftdichte Schläuche aus Gummi, Kunststoff und/oder Gewebematerialien.

Die Ventileinheit 2 ist über ein Schraubgewinde 6 mit dem flaschenförmigen Dichtmittelbehälter 1 verbunden. Im Dichtmittelbehälter befindet sich ein hier ebenfalls nicht näher dargestelltes in den aufblasbaren Gegenstand einfüllbares selbsttätiges Dichtmittel.

Die Einlassleitung 3 ist behälterseitig als Ringraum-Leitung innerhalb eines zentrisch in die Behälteröffnung reichenden Einlassstutzens 7 ausgebildet. Dieser Einlassstutzen und damit die Ringraum-Leitung umgeben ringförmig eine Teillänge der Auslassleitung 4, wobei die Teillänge in Form eines Auslassstutzens 4' ausgebildet ist.

In dem Einlassstutzen 7 ist dass das Einlassventil als eine in die Ringraum-Leitung eingesetzte O-Ring-Dichtung 8 ausgebildet, die bei Beaufschlagung mit Druckgas aus dem Einlassstutzen in den Behälterinnenraum 9 bleibend verschiebbar ist und damit die Einlassleitung 3 zum Behälterinnenraum 9 öffnet.

Die Auslassleitung 4 ist dabei im Bereich des Flaschenhalses, wie bereits oben erwähnt, als ein in die Behälteröffnung 5 reichender Auslassstutzen 4' ausgebildet und mit einem in den Behälter 1 hineinragenden und bis unter den Spiegel eines hier nicht näher dargestellten Dichtmittels reichenden Steigrohr 10 verbunden. Das Steigrohr kann dabei über Zwischenstücke oder Adapter 11, 11' an die Auslassleitung 4 bzw. 4' angebunden sein. Solche Zwischenstücke haben den Vorteil, dass sich die Bearbeitung von etwa vorhanden Ventil- oder Dichtsitzen vereinfacht, da eben nur das Zwischenstück bearbeitet werden muss, und dass normierte Kunststoffrohre als Steigrohre für verschiedene Durchmesser von Auslassleitungen 4, 4' verwendet werden können.

In der Auslassleitung 4 befindet sich unterhalb des Auslassstutzens 4' und im Bereich des Adapters 11 ein Auslassventil, welches bei Beaufschlagung mit Druckgas aus der Druckquelle die Auslassleitung 4, 4' vom Behälterinnenraum zum Kraftfahrzeugreifen hin öffnet. Das Auslassventil ist als Dichtung ausgebildet, die bei Beaufschlagung mit Druckgas von ihrem Dichtsitz bleibend verschiebbar ist.

Bei der in der Fig. 1 gezeigten Ausführung weist die Auslassleitung dabei im Bereich des Adapters 11 einen Ringraum 12 auf, in welchem das Auslassventil als in den Ringraum 12 eingesetzter O-Ring 13 ausgebildet ist, der bei Beaufschlagung mit Druckgas aus dem Ringraum nach oben verschiebbar ist. Der Ringraum 12 wird hier gebildet durch die Innenwand des Adapters 11 und ein Mittelstück 16.

Natürlich kann ein solcher Ringraum für das Auslassventil - oder eine andere Art von Ventilsitz für eine verschiebbare Dichtung - auch im Bereich des Steigrohres 10 oder innerhalb des Auslassstutzens 4' angeordnet und auf verschiedene Arten konstruktiv ausgebildet sein.

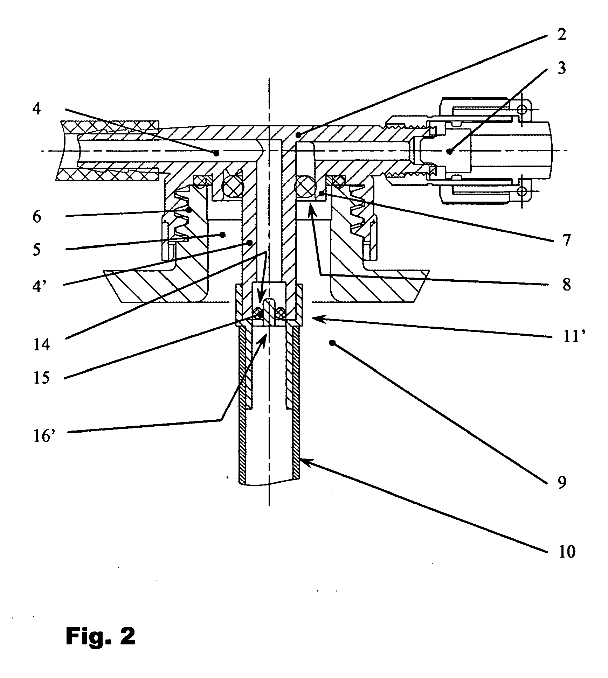

Eine solche weitere Ausführung zeigt die Fig. 2. Dort wird der in den Ringraum 14 eingesetzte O-Ring 15 zwischen der Innenwand des Auslassstutzens 4' und einem Mittelstück 16' gehalten, welches im Adapter 11' befestigt ist.

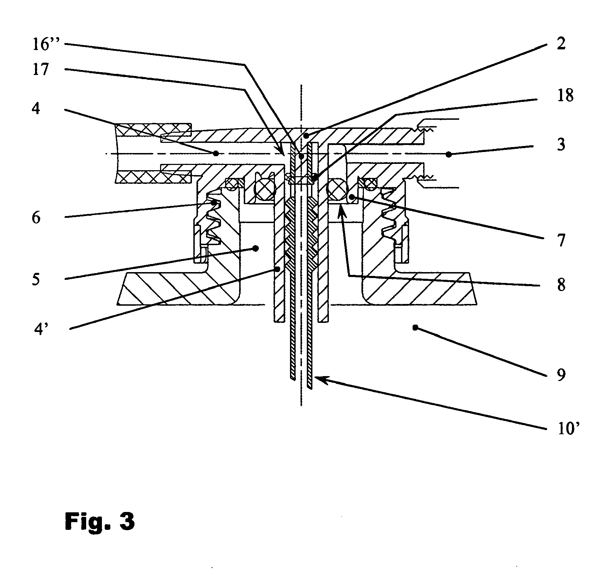

Eine wiederum andere Ausführung zeigt die Fig. 3. Dort wird der in den Ringraum 17 eingesetzte O-Ring 18 zwischen der Innenwand des Auslassstutzens 4' und einem im Auslassstutzen angeordneten Mittelstück 16" gehalten. Hier ist das Steigrohr 10' direkt und ohne Adapter mit dem Auslassstutzens 4' verbunden.

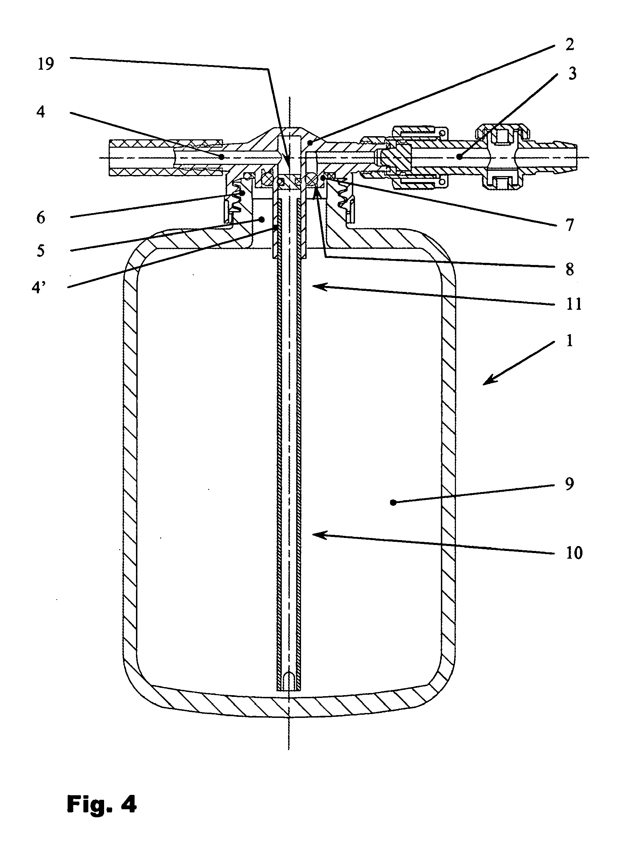

Die Fig. 4 zeigt eine vierte Ausführung der Ventileinheit mit den Einlass- und Auslassventilen für ein erfmdungsgemäßes Pannenhilfesystems, bei dem das Auslassventil als ein in die Auslassleitung 4 bzw. in den Auslassstutzen 4' eingesetzter und gegenüber letzterer abgedichteter Kolben 19 ausgebildet ist, der bei Beaufschlagung mit Druckgas in einen oberen Bereich der Auslassleitung verschiebbar ist. Durch das Verschieben wird der Durchgang zur Auslassleitung 4 dann freigegeben

Natürlich kann der Kolben 19 in einen in Bezug auf den Innendurchmesser erweiterten Bereich der Auslassleitung verschoben werden, so dass das Dichtmittel am Kolben vorbei fließen kann.

Der Kolben 19 kann dabei im Auslassstutzen 4', im Steigrohr 10 oder in einem Adapter eingesetzt sein. Ein Einsatz im Adapter ist sicher besonders vorteilhaft, da hier lediglich der Innenraum des Adapters auf die Verschiebefunktion angepasst werden muss.

Der Kolben 19 ist mit einem in einer Nut der Kolbenwand aufgenommenen O-Ring gegenüber der Auslassleitung abgedichtet.

Üblicherweise ist der Dichtmittelbehälter 1 im Betriebszustand auf seiner Grundfläche 20 aufrecht stehend angeordnet ist, er kann aber ebenso gut in aufrechter Stellung mit einem Gehäuse verbunden sein, in dem die Druckgasquelle angeordnet ist.

In den Fällen, in denen lediglich ein Pumpen von Luft ohne Dichtmittel stattfinden soll, etwa beim Aufblasen von Reifen, Schlauchbooten, Luftmatratzen, etc., kann der Kompressor oder die Druckgasquelle direkt an den aufzublasenden Gegenstand angeschlossen werden. In den Fällen, in denen dann ein Dichtmittel in einen Reifen gefördert werden soll, wird dann der Dichtmittelbehälter mit seiner Ventileinheit über die genannten geeigneten Verbindungsmittel zwischen Kompressor und Kraftfahrzeugreifen eingefügt. Die Ventile öffnen druckbeaufschlagt selbständig und ohne weitere manuelle Schaltvorgänge.

Das Steigrohr 10 ist üblicherweise bis zum Boden des Behälters 1 herabgeführt, damit unter Druckbeaufschlagung eine vollständige Entleerung stattfinden kann.

### Bezugszeichenliste

### (Teil der Beschreibung)

| | |
|---|---|
| 1 | Behälter |
| 2 | Ventileinheit |
| 3 | Einlassleitung |
| 4 | Auslassleitung |
| 4' | Auslassstutzen |
| 5 | Behälteröffnung |
| 6 | Schraubgewinde |
| 7 | Einlassstutzen |
| 8 | O-Ring-Dichtung für Einlassleitung |
| 9 | Behälterinnenraum |
| 10, 10' | Steigrohr |
| 11, 11' | Adapter |
| 12 | Ringraum |
| 13 | O-Ring-Dichtung für Auslassleitung |
| 14 | Ringraum |
| 15 | O-Ring-Dichtung für Auslassleitung |
| 16, 16', 16" | Mittelstück |
| 17 | Ringraum |
| 18 | O-Ring-Dichtung für Auslassleitung |
| 19 | Kolben |
| 20 | Grundfläche |

## Patentansprüche

1. Pannenhilfesystem zum Abdichten und Aufpumpen von Kraftfahrzeugreifen, wobei das Pannenhilfesystem folgende Einrichtungen umfasst:
- eine Druckgasquelle,
- einen Behälter (1) für ein in den Kraftfahrzeugreifen einfüllbares selbsttätiges Dichtmittel, wobei der Behälter (1) eine an seinem oberen Ende befindlichen Behälteröffnung (5) aufweist und aufrecht angeordnet ist,
- eine mit dem Behälter (1) verbundene Ventileinheit (2) für Dichtmittel und Druckgas, wobei die Ventileinheit (2) als Deckel für die Behälteröffnung (5) ausgebildet und mit einer an die Druckgasquelle anschließbaren Einlassleitung (3) und einer an den Kraftfahrzeugreifen anschließbaren Auslassleitung (4) versehen ist,
- geeignete Verbindungsmittel zur Verbindung zwischen Druckgasquelle und Einlassleitung (3) des Behälters (5) sowie zwischen Auslassleitung (4) des Behälters (5) und Kraftfahrzeugreifen,
- wobei die Einlassleitung (3) ein Einlassventil aufweist, welches bei Beaufschlagung mit Druckgas aus der Druckquelle die Einlassleitung (3) zum Behälterinnenraum öffnet,
- und wobei die Auslassleitung (4, 4') mit einem in den Behälterinnenraum (9) hineinragenden und bis unter den Dichtmittelspiegel reichenden Steigrohr (10) verbunden ist und ein Auslassventil aufweist, welches bei Beaufschlagung mit Druckgas aus der Druckquelle die Auslassleitung (4, 4') vom Behälterinnenraum (9) zum Kraftfahrzeugreifen hin öffnet, wobei
- die Einlassleitung (3) als Ringraum-Leitung innerhalb eines in die Behälteröffnung reichenden Einlassstutzens (7) ausgebildet ist und
- das Einlassventil bei Beaufschlagung mit Druckgas aus dem Einlassstutzen (7) bleibend verschiebbar ist,
**dadurch gekennzeichnet, dass** das Eindassventil als in dei Ringraum-Leitung eingesetzte O-Ring-Dichtung (8) ausgebildet ist.

2. Pannenhilfesystem nach Anspruch 1, bei dem die Einlassleitung (3) innerhalb eines zentrisch in die Behälteröffnung reichenden Einlassstutzens (7) ausgebildet ist und eine Teillänge (4') der Auslassleitung (4) ringförmig umgibt.

3. Pannenhilfesystem nach Anspruch 1 oder 2, bei dem die Auslassleitung als ein in die Behälteröffnung reichender Auslassstutzens (4') ausgebildet ist, an den sich das Steigrohr (10,10') anschließt.

4. Pannenhilfesystem nach Anspruch 3, bei dem das Steigrohr (10, 10') über Zwischenstücke oder Adapter (11, 11') an die Auslassleitung oder den Auslassstutzen (4, 4') angebunden ist

5. Pannenhilfesystem nach einem der Ansprüche 1 bis 4, bei dem das Auslassventil als Dichtung (13, 15, 18) ausgebildet ist, die bei Beaufschlagung mit Druckgas von ihrem Dichtsitz bleibend verschiebbar ist.

6. Pannenhilfesystem nach Anspruch 5, bei dem die Auslassleitung einen Ringraum (12, 14, 17) aufweist und das Auslassventil als in den Ringraum eingesetzter O-Ring (13, 15, 18) ausgebildet ist, der bei Beaufschlagung mit Druckgas aus dem Ringraum verschiebbar ist.

7. Pannenhilfesystem nach Anspruch 6, bei dem sich der Ringraum (17) im Bereich des Auslassstutzens (4') befindet.

8. Pannenhilfesystem nach Anspruch 6, bei dem sich der Ringraum im Bereich des Steigrohres (10, 10') befindet.

9. Pannenhilfesystem nach Anspruch 6, bei dem sich der Ringraum (12, 14) im Bereich des Zwischenstücks oder Adapters (11, 11') befindet.

10. Pannenhilfesystem nach Anspruch 5, bei dem das Auslassventil als ein in die Auslassleitung eingesetzter und gegenüber letzteren abgedichteter Kolben (19) ausgebildet ist, der bei Beaufschlagung mit Druckgas verschiebbar ist.

11. Pannenhilfesystem nach Anspruch 10, bei dem der Kolben (19) in einen in Bezug auf den Innendurchmesser erweiterten Bereich der Auslassleitung verschiebbar ist.

12. Pannenhilfesystem nach Anspruch 10 oder 11, bei dem der Kolben (19) im Auslassstutzen (4'), im Steigrohr (10) oder in einem Adapter eingesetzt ist.

13. Pannenhilfesystem nach einem der Ansprüche 10 bis 12, bei dem der Kolben (19) mit einem in einer Nut der Kolbenwand aufgenommenen O-Ring gegenüber der Auslassleitung abgedichtet ist

14. Pannenhilfesystem nach einem der Ansprüche 1 bis 13, bei dem der Dichtmittelbehälter (1) im Betriebszustand auf seiner Grundfläche (20) aufrecht stehend angeordnet ist.

15. Pannenhilfesystem nach einem der Ansprüche 1 bis 13, bei dem die Druckgasquelle in einem Gehäuse angeordnet und der Behälter (1) in aufrechter Stellung mit dem Gehäuse verbunden ist.

16. Pannenhilfesystem nach einem der Ansprüche 1 bis 15, bei dem das Steigrohr (1, 10') bis zum Boden des Behälters (1) herabgeführt ist.

## Claims

1. Breakdown assistance system for sealing and inflating motor-vehicle tyres, the breakdown assistance system comprising the following devices:
- a compressed gas source,
- a vessel (1) for a self-actuating sealant which can be filled into the motor-vehicle tyre, the vessel (1) being arranged upright and having a vessel opening (5) which is situated at its upper end,
- a valve unit (2) for sealant and compressed gas, which valve unit (2) is connected to the vessel (1), the valve unit (2) being configured as a cover for the vessel opening (5) and being provided with an inlet line (3) which can be connected to the compressed gas source and with an outlet line (4) which can be connected to the motor-vehicle tyre,
- suitable connecting means for connecting between the compressed gas source and the inlet line (3) of the vessel (5) and between the outlet line (4) of the vessel (5) and the motor-vehicle tyre,
- the inlet line (3) having an inlet valve which, when loaded with compressed gas from the pressure source, opens the inlet line (3) to the vessel interior,
- and the outlet line (4, 4') being connected to a riser pipe (10) which protrudes into the vessel interior (9) and reaches below the sealant level and having an outlet valve which, upon being loaded with compressed gas from the pressure source, opens the outlet line (4, 4') from the vessel interior (9) towards the motor-vehicle tyre,
- the inlet line (3) being configured as an annular-space line within an inlet stub (7) which reaches into the vessel opening, and
- it being possible for the inlet valve, upon being loaded with compressed gas, to be displaced permanently out of the inlet stub (7), **characterized in that** the inlet valve is configured as an 0-ring seal (8) which is inserted into the annular-space line.

2. Breakdown assistance system according to Claim 1, in which the inlet line (3) is configured within an inlet stub (7), which reaches centrally into the vessel opening, and surrounds a part length (4') of the outlet line (4) annularly.

3. Breakdown assistance system according to Claim 1 or 2, in which the outlet line is configured as an outlet stub (4') which reaches into the vessel opening and is adjoined by the riser pipe (10, 10').

4. Breakdown assistance system according to Claim 3, in which the riser pipe (10, 10') is attached via intermediate pieces or adapters (11, 11') to the outlet line or the outlet stub (4, 4').

5. Breakdown assistance system according to one of Claims 1 to 4, in which the outlet valve is configured as a seal (13, 15, 18) which, upon being loaded with compressed gas, can be displaced permanently from its sealing seat.

6. Breakdown assistance system according to Claim 5, in which the outlet line has an annular space (12, 14, 17) and the outlet valve is configured as an 0-ring (13, 15, 18) which is inserted into the annular space and, upon being loaded with compressed gas, can be displaced out of the annular space.

7. Breakdown assistance system according to Claim 6, in which the annular space (17) is situated in the region of the outlet stub (4').

8. Breakdown assistance system according to Claim 6, in which the annular space is situated in the region of the riser pipe (10, 10').

9. Breakdown assistance system according to Claim 6, in which the annular space (12, 14) is situated in the region of the intermediate piece or adapter (11, 11').

10. Breakdown assistance system according to Claim 5, in which the outlet valve is configured as a piston (19) which is inserted into the outlet line, is sealed with respect to the latter and, upon being loaded with compressed gas, can be displaced.

11. Breakdown assistance system according to Claim 10, in which the piston (19) can be displaced into a region of the outlet line, which region is widened in relation to the internal diameter.

12. Breakdown assistance system according to Claim 10 or 11, in which the piston (19) is inserted in the outlet stub (4'), in the riser pipe (10) or in an adapter.

13. Breakdown assistance system according to one of Claims 10 to 12, in which the piston (19) is sealed with respect to the outlet line by way of an 0-ring which is received in a groove of the piston wall.

14. Breakdown assistance system according to one of Claims 1 to 13, in which the sealant vessel (1) is arranged so as to stand upright on its base face (20) in the operating state.

15. Breakdown assistance system according to one of Claims 1 to 13, in which the compressed gas source is arranged in a housing and the vessel (1) is connected in the upright position to the housing.

16. Breakdown assistance system according to one of Claims 1 to 15, in which the riser pipe (1, 10') is guided down as far as the bottom of the vessel (1).

## Revendications

1. Système d'assistance en cas de panne, servant à rétablir l'étanchéité et à gonfler des bandages pneumatiques de roue de véhicule, le système d'assistance aux pannes comportant les dispositifs suivants :
une source de gaz sous pression,
un récipient (1) pour un moyen d'étanchéité autonome qui peut être injecté dans le bandage pneumatique pour roue de véhicule, le récipient (1) présentant une ouverture (5) située à son extrémité supérieure et étant disposée debout,
une unité de soupape (2) pour le moyen d'étanchéité et le gaz sous pression, reliée au récipient (1), l'unité de soupape (2) étant configurée comme couvercle de l'ouverture (5) du récipient et étant dotée d'un conduit d'admission (3) qui peut être raccordé à la source de gaz sous pression et d'un conduit de sortie (4) qui peut être raccordé au bandage pneumatique pour roue de véhicule,
des moyens appropriés de liaison qui assurent la liaison entre la source de gaz sous pression et le conduit d'admission (3) du récipient (5) ainsi qu'entre le conduit de sortie (4) du récipient (5) et le bandage pneumatique pour roue de véhicule,
le conduit d'admission (3) présentant une soupape d'admission qui ouvre le conduit (3) d'admission sur l'espace intérieur du récipient lorsque du gaz sous pression provenant de la source de pression y est appliqué,
le conduit de sortie (4, 4') étant relié à un tube plongeur (10) qui pénètre dans l'espace intérieur (9) du récipient, qui s'étend jusqu'en dessous du niveau d'agent d'étanchéité et qui présente une soupape de sortie qui, ouvre le conduit de sortie (4, 4') entre l'espace intérieur (9) du récipient et le bandage pneumatique pour roue de véhicule lorsque du gaz sous pression provenant de la source sous pression lui est appliqué,
le conduit d'admission (3) étant configuré comme conduit à espace annulaire à l'intérieur d'une tubulure d'admission (7) qui pénètre dans l'ouverture du récipient et
la soupape d'admission pouvant coulisser de manière permanente hors de la tubulure d'admission (7) lorsque du gaz sous pression lui est appliqué, **caractérisé en ce que**
la soupape d'admission est configurée comme joint torique (8) inséré dans le conduit annulaire.

2. Système d'assistance en cas de panne selon la revendication 1, dans lequel le conduit d'admission (3) est formé à l'intérieur d'une tubulure d'admission (7) qui s'étend au centre de l'ouverture du récipient et entoure en anneau une partie (4') de la longueur du conduit de sortie (4).

3. Système d'assistance en cas de panne selon les revendications 1 ou 2, dans lequel le conduit de sortie est configuré comme tubulure de sortie (4') qui s'étend dans l'ouverture du récipient et à laquelle se raccorde le tube plongeur (10, 10').

4. Système d'assistance en cas de panne selon la revendication 3, dans lequel le tube plongeur (10, 10') est raccordé par l'intermédiaire de pièces intermédiaires ou d'adaptateurs (11, 11') au conduit de sortie ou à la tubulure de sortie (4, 4').

5. Système d'assistance en cas de panne selon l'une des revendications 1 à 4, dans lequel la soupape de sortie est configurée comme joint d'étanchéité (13, 15, 18) qui peut être déplacé de manière permanente hors de son siège de fermeture lorsque du gaz sous pression lui est appliqué.

6. Système d'assistance en cas de panne selon la revendication 5, dans lequel le conduit de sortie présente un espace annulaire (12, 14, 17) et dans lequel la soupape de sortie est configurée comme joint torique (13, 15, 18) inséré dans l'espace annulaire et apte à être déplacé hors de l'espace annulaire lorsque du gaz sous pression est appliqué.

7. Système d'assistance en cas de panne selon la revendication 6, dans lequel l'espace annulaire (17) est situé au niveau de la tubulure de sortie (4').

8. Système d'assistance en cas de panne selon la revendication 6, dans lequel l'espace annulaire est situé au niveau du tube plongeur (10, 10').

9. Système d'assistance en cas de panne selon la revendication 6, dans lequel l'espace annulaire (12, 14) est situé au niveau de la pièce intermédiaire ou de l'adaptateur (11, 11').

10. Système d'assistance en cas de panne selon la revendication 5, dans lequel la soupape de sortie est configurée comme piston (19) inséré dans le conduit de sortie, assurant l'étanchéité de ce dernier et apte à être déplacé lorsque du gaz sous pression est appliqué.

11. Système d'assistance en cas de panne selon la revendication 10, dans lequel le piston (19) peut être déplacé dans une partie de plus grand diamètre intérieur du conduit de sortie.

12. Système d'assistance en cas de panne selon les revendications 10 ou 11, dans lequel le piston (19) est inséré dans la tubulure de sortie (4'), dans le tube plongeur (10) ou dans un adaptateur.

13. Système d'assistance en cas de panne selon l'une des revendications 10 à 12, dans lequel l'étanchéité du piston (19) par rapport au conduit de sortie est assurée par un joint torique repris dans une rainure de la paroi du piston.

14. Système d'assistance en cas de panne selon l'une des revendications 1 à 13, dans lequel en position de fonctionnement, le récipient (1) à agent d'étanchéité est placé debout sur sa surface de base (20).

15. Système d'assistance en cas de panne selon l'une des revendications 1 à 13, dans lequel la source de gaz sous pression est disposée dans un boîtier et le récipient (1) est relié en position debout au boîtier.

16. Système d'assistance en cas de panne selon l'une des revendications 1 à 15, dans lequel le tube plongeur (1, 10') descend jusqu'au fond du récipient (1).
